# FASCICULE DE BREVET EUROPEEN

(11) **EP 1 676 733 B1**
(45) Date de publication et mention de la délivrance du brevet: **24.10.2007**
(21) Numéro de dépôt: 05301045.0
(22) Date de dépôt: 13.12.2005
(51) Int. Cl.: B60H 1/24

(54) **Dispositif d'extraction d'air d'un véhicule automobile**
Entlüftungsvorrichtung für ein Kraftfahrzeug
Device for the evacuation of air for a motor vehicle

(30) Priorité: 29.12.2004 FR 0414042
(43) Date de publication de la demande: 05.07.2006
(73) Titulaire: RENAULT S.A.S., 92100 Boulogne Billancourt (FR)
(72) Inventeur: Brault, Christophe, 78180 Montigny le Bretonneux (FR); Donascimento, Silvino, 78390 Bois d'Arcy (FR); Perot, Patrick, 78960 Voisins le Bretonneux (FR)

(56) Documents cités:
- DE-A1- 3 533 047
- DE-A1- 10 008 565
- DE-A1- 19 540 823
- DE-A1- 19 618 396
- US-A1- 2004 224 099
- US-A1- 2004 259 493

## Description

La présente invention se rapporte à un dispositif d'extraction d'air destiné notamment, mais non exclusivement aux véhicules automobiles.

Les dispositifs d'extraction d'air sont adaptés à faire circuler de l'air entre l'intérieur et extérieur des véhicules. Les véhicules comprennent une carrosserie, à l'intérieur de laquelle s'étend un habitacle, et la carrosserie recouvre généralement à l'avant du véhicule un moteur thermique, et à l'arrière un coffre. En outre, la carrosserie présente au moins une portion de paroi arrière dans laquelle est ménagée une ouverture, l'extracteur d'air présentant un chemin de passage d'air qui débouche alors à travers cette ouverture de manière à évacuer l'air de l'intérieur vers l'extérieur.

De plus, la carrosserie présente à l'arrière une poutre transversale qui longe la paroi arrière en dessous de l'ouverture et qui est généralement recouverte par un pare-chocs. La poutre transversale présente elle, une surface supérieure en dessous de l'ouverture, et qui est recouverte d'une plaque de mousse acoustique qui s'étend à partir du bord de l'ouverture dans une direction opposée.

Cette plaque de mousse acoustique permet alors d'absorber certaines vibrations acoustiques de fréquences moyennes et qui génèrent des bruits incommodants. Elle est généralement collée sur ladite surface supérieure au cours du montage du véhicule automobile, un tel dispositif est connu du document DE 19618396. Ainsi, il est nécessaire de mettre en oeuvre des moyens de collage relativement coûteux pour solidariser cette plaque à la poutre et par ailleurs, il sera malaisé de séparer ensuite la plaque de mousse acoustique et la poutre lors du recyclage du véhicule.

Un problème qui se pose alors et que vise à résoudre la présente invention est de maintenir ladite plaque de mousse acoustique en appui sur la surface supérieure de la poutre sans pour autant que la mousse et la poutre ne soient intimement liées par de la colle.

Dans ce but, la présente invention propose un dispositif d'extraction d'air d'un véhicule automobile, destiné à la circulation de l'air entre l'intérieur et l'extérieur dudit véhicule, ledit véhicule comportant une carrosserie qui présente une portion de paroi arrière, ledit dispositif d'extraction d'air présentant un chemin de passage d'air qui débouche à travers une ouverture pratiquée dans ladite portion de paroi arrière, ladite carrosserie présentant en outre une poutre transversale qui longe ladite portion de paroi arrière, ladite poutre transversale présentant une surface supérieure qui s'étend sensiblement perpendiculairement à ladite portion de paroi arrière sous ladite ouverture, ladite surface supérieure étant recouverte d'une plaque de mousse acoustique qui s'étend dans le prolongement dudit chemin de passage d'air ; et selon l'invention, ladite poutre est équipée d'un lien démontable destiné à entourer au moins partiellement ladite plaque de mousse pour la maintenir en appui contre ladite surface supérieure.

Ainsi, une caractéristique de l'invention réside dans le mode de liaison de la plaque de mousse acoustique et de la surface supérieure de la poutre qui est réalisé, non pas en les collant ensemble, mais en maintenant en appui la plaque par l'intermédiaire du lien démontable qui vient la recouvrir au moins partiellement. De la sorte, il n'est nul besoin de mettre en oeuvre des moyens de collage relativement coûteux, et la plaque de mousse acoustique est adaptée à être retirée de la poutre en démontant ledit lien sans que des traces de matériau de l'une ou l'autre de la poutre ou de la plaque de mousse ne se retrouvent sur l'une ou l'autre. Ainsi, la recyclabilité de la poutre transversale et de la mousse acoustique est totale. Au surplus, la plaque de mousse est aisée à monter et à démonter, ce qui permet des gains de temps significatifs.

Selon un mode de mise en oeuvre de l'invention particulièrement avantageux, ladite surface supérieure présentant un bord de contact situé en regard de ladite portion arrière et un bord libre opposé à ladite portion arrière, ledit lien démontable présente une extrémité de fixation solidaire de l'un desdits bords et une extrémité libre d'accrochage destinée à venir s'accrocher dans l'autre bord. De la sorte, il est aisé de monter la plaque de mousse acoustique sur la surface supérieure et de la maintenir en appui en rabattant le lien démontable et en accrochant son extrémité libre dans le bord opposé. À l'inverse, il est également aisé de procéder au démontage du lien pour retirer la plaque de mousse acoustique de la surface supérieure sans dégrader l'un ou l'autre.

Selon un mode de réalisation de l'invention particulièrement avantageux, ledit lien démontable comprend une languette montée articulée dans ledit bord de contact au droit de ladite ouverture, ladite languette présentant une extrémité libre terminée par un ergot d'encliquetage, ledit ergot d'encliquetage étant adapté à venir s'encliqueter dans ledit bord libre opposé. Ainsi, la plaque de mousse acoustique est susceptible d'être monté sur ladite surface supérieure après que la poutre transversale a été installée le long de la portion arrière et la languette initialement relevée vers ladite portion de paroi arrière est alors rabattue pour recouvrir la plaque de mousse et être encliquetée dans le bord opposé.

De manière préférentielle, ladite poutre transversale présente une paroi supérieure définissant ladite surface supérieure et formant lesdits bords, ladite paroi supérieure présentant une fente transversale dans ledit bord libre opposé, ledit ergot d'encliquetage étant adapté à être engagé à force dans ladite fente pour relier ladite extrémité libre audit bord libre opposé. De la sorte, en introduisant l'ergot d'encliquetage dans la fente, ce dernier est alors rendu prisonnier du bord libre, et ce de façon sûre et très simple.

Selon encore un autre mode de mise en oeuvre de l'invention particulièrement avantageux, ladite poutre transversale et ladite languette sont moulées ensemble d'une seule pièce en matière plastique de sorte que, la languette est formée sur ladite poutre transversale à un coût marginal très faible équivalent au coût de matière première pour réaliser la languette.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique arrière gauche en perspective montrant un dispositif d'extraction d'air conforme à l'invention ;
- la Figure 2 est une vue schématique de détail illustrant un élément représenté sur la Figure 1 ; et,
- la Figure 3 est une vue schématique en coupe droite de l'objet représenté sur la Figure 2, selon III-III.

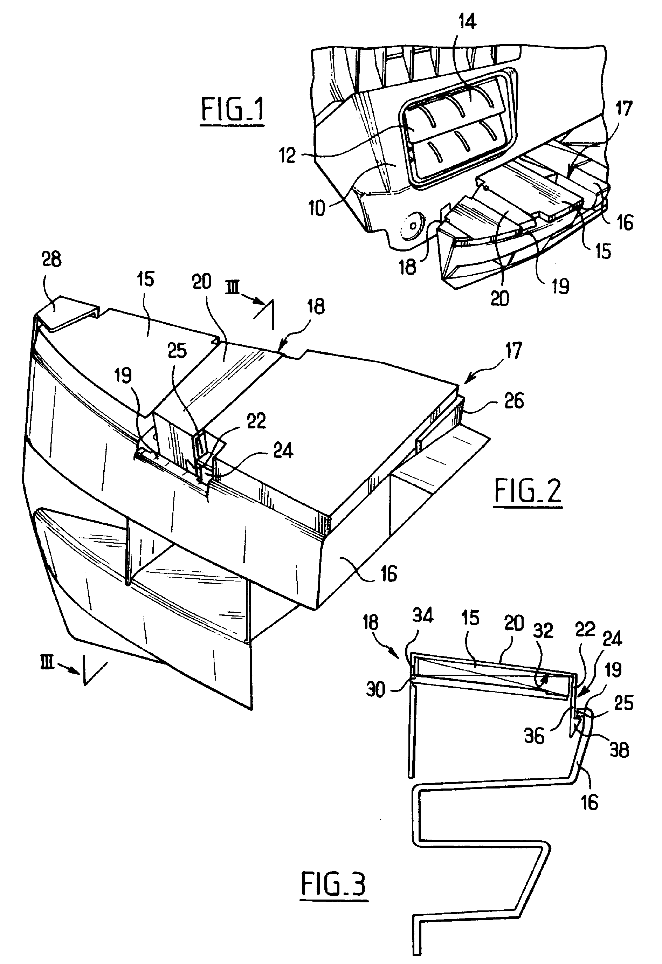

La Figure 1 illustre en perspective une portion de paroi arrière gauche 10 d'une carrosserie d'un véhicule automobile. Cette portion de paroi arrière gauche 10 est située dans la partie inférieure du véhicule, au-dessous des feux stops et indicateurs de direction. En outre, une ouverture 12 est ménagée dans cette paroi arrière 10 et un conduit d'évacuation 14 qui débouche dans cette ouverture et définit un chemin de passage d'air, est destiné à rejoindre un habitacle situé à l'intérieur du véhicule. De la sorte, l'air contenu dans l'habitacle est susceptible d'être perpétuellement évacué à travers ledit conduit d'évacuation 14 afin d'être renouvelé.

Les dispositifs d'extraction d'air génèrent habituellement des nuisances acoustiques et il est nécessaire de disposer des plaques de mousse acoustique 15 à proximité de l'ouverture 12 pour atténuer les vibrations de la colonne d'air qui s'écoule à travers le conduit d'évacuation 14 vers l'extérieur. La paroi arrière de véhicule est équipée d'une poutre transversale 16, qui s'étend latéralement sur tout l'arrière du véhicule en formant rebord, notamment en dessous de l'ouverture 12 et qui est alors utilisée pour fixer la plaque de mousse acoustique 15 au droit de l'ouverture 12. La poutre transversale 16, présente une surface supérieure d'appui 17 contre laquelle la plaque de mousse acoustique 15 est en appui, un bord de contact 18 rapproché de la portion de paroi arrière 10 et un bord libre opposé 19, à distance de la paroi arrière 10. Cette poutre transversale 16, constituée d'un caisson alvéolaire adapté à absorber les chocs, est généralement recouverte par le pare-chocs qui s'étend alors en regard de l'ouverture 12 et qui rejoint la carrosserie au-dessus. Ainsi, l'ouverture 12 est masquée par le pare-chocs et l'air qui la traverse s'écoule latéralement entre le pare-chocs et la portion de paroi arrière 10.

Néanmoins, la plaque de mousse acoustique 15, illustrée en détail sur la Figure 2 et en appui sur la surface supérieure 17, y est maintenue grâce à un lien formé d'une languette 20.

La languette 20 est montée articulée sur le bord de contact 18 et elle présente une extrémité libre 22 accrochée dans le bord libre opposé 19 de la poutre transversale 16. Pour ce faire, une fente transversale 24 est ménagée le long du bord libre 19 dans une paroi supérieure 25 définissant la surface supérieure 17, pour y engager ladite extrémité libre 22. Par ailleurs, la plaque de mousse acoustique 15 est maintenue latéralement par des rebords en coin opposés 26, 28, de telle façon que la languette de 20 rabattue contre la plaque de mousse acoustique 15 et engagée dans le bord libre opposé 19, la maintient parfaitement en position fixe contre la surface supérieure d'appui 17.

On va expliquer maintenant plus en détail, le mode d'accrochage de la languette 20 en référence à la Figure 3 qui montre en coupe droite, la languette 20, la plaque de mousse acoustique 15 et la poutre transversale 16. Sur cette Figure 3, la languette 20 est rabattue contre la plaque de mousse acoustique 15 et son extrémité libre 22 est rendue solidaire du bord libre 19 de la poutre 16.

Tout d'abord, la poutre transversale 16 et la languette 20 sont moulées d'une seule pièce en matière plastique de telle façon que la languette 20 puisse pivoter autour d'une première extrémité 30 dans le bord de contact 18 de la poutre 16. La languette 20 forme une structure en U, dont le fond plat 32 s'appuie contre au moins une portion de la plaque de mousse 15, dont une première aile courte 34 rejoint ladite première extrémité 30 et dont une seconde aile opposée 36 plus longue, présente un ergot d'encliquetage 38 qui s'étend en retour.

Par ailleurs, on retrouve sur la Figure 3 la fente 24 dans laquelle la seconde aile opposée 36 est engagée. En outre, la paroi 25 forme un bord d'appui à l'intérieur de la poutre transversale 16, le long de la fente 24, contre lequel l'ergot d'encliquetage 38 vient prendre appui pour rendre solidaire l'extrémité libre 22 du bord libre 19 de la poutre 16.

La poutre transversale 16 et la languette 20 sont moulées dans une matière plastique relativement rigide. Néanmoins, compte tenu de la faible épaisseur de la languette 20, sa première extrémité 30 est adaptée à pivoter sans se rompre. En outre, la seconde aile 36 est suffisamment flexible et forme ressort de telle sorte que l'ergot encliquetage 38 qui s'étend en retour est maintenu contre le bord d'appui de la fente 24. Lorsqu'il est nécessaire de retirer la plaque de mousse acoustique 15, il suffit de repousser la seconde aile 36 pour désengager l'ergot d'encliquetage 38 et faire pivoter la languette 20.

Ainsi, il n'est nul besoin de coller la plaque de mousse acoustique sur la poutre transversale 16 ou de rapporter des pièces de fixation et de surcroît, elle est démontable grâce à la languette 20 qui elle est désencliquetable. En outre, cette languette 20 est économique à réaliser puisqu'elle est moulée avec la poutre transversale 16.

Et surtout, elle permet un montage rapide sur les chaînes de production de véhicules automobiles, puisque aucune pièce ni outil supplémentaires ne sont nécessaires pour venir fixer la plaque de mousse acoustique.

## Revendications

1. Dispositif d'extraction d'air d'un véhicule automobile, destiné à la circulation de l'air entre l'intérieur et l'extérieur dudit véhicule, ledit véhicule comportant une carrosserie qui présente une portion de paroi arrière (10), ledit dispositif d'extraction d'air présentant un chemin de passage d'air qui débouche à travers une ouverture (12) pratiquée dans ladite portion de paroi arrière (10), ladite carrosserie présentant en outre une poutre transversale (16) qui longe ladite portion de paroi arrière (10), ladite poutre transversale (16) présentant une surface supérieure (17) qui s'étend sensiblement perpendiculairement à ladite portion de paroi arrière (10) sous ladite ouverture (12), ladite surface supérieure (17) étant recouverte d'une plaque de mousse acoustique (15) qui s'étend dans le prolongement dudit chemin de passage d'air ;
**caractérisé en ce que** ladite poutre transversale (16) est équipée d'un lien démontable (20) destiné à entourer au moins partiellement ladite plaque de mousse acoustique (15) pour la maintenir en appui contre ladite surface supérieure (17).

2. Dispositif d'extraction d'air selon la revendication 1, **caractérisé en ce que**, ladite surface supérieure (17) présentant un bord de contact (18) situé en regard de ladite portion arrière (10) et un bord libre opposé (19) à ladite portion arrière, ledit lien démontable (20) présente une extrémité de fixation (30) solidaire de l'un desdits bords (18) et une extrémité libre d'accrochage (22) destinée à venir s'accrocher dans l'autre bord (19).

3. Dispositif d'extraction d'air selon la revendication 2, **caractérisé en ce que** ledit lien démontable (20) comprend une languette montée articulée dans ledit bord de contact (18) au droit de ladite ouverture (12), ladite languette présentant une extrémité libre (22) terminée par un ergot d'encliquetage (38), ledit ergot d'encliquetage étant adapté à venir s'encliqueter dans ledit bord libre opposé (19).

4. Dispositif d'extraction d'air selon la revendication 2, **caractérisé en ce que** ladite poutre transversale (16) présente une paroi supérieure définissant ladite surface supérieure (17) et formant lesdits bords (18, 19), ladite paroi supérieure présentant une fente transversale (24) dans ledit bord libre opposé (19), ledit ergot d'encliquetage (38) étant adapté à être engagé à force dans ladite fente (24) pour relier ladite extrémité libre (22) audit bord libre opposé (19).

5. Dispositif d'extraction d'air selon la revendication 2, **caractérisé en ce que** ladite poutre transversale (16) et ladite languette (20) sont moulées ensemble d'une seule pièce en matière plastique.

## Claims

1. Air extraction device for a motor vehicle, intended to circulate air between the interior and the exterior of the said vehicle, the said vehicle comprising a body which has a rear panel portion (10), the said air extraction device having an air passageway which emerges through an opening (12) made in the said rear panel portion (10), the said body having moreover a transverse beam (16) which borders the said rear panel portion (10), the said transverse beam (16) having an upper surface (17) which lies generally perpendicularly to the said rear panel portion (10) below the said opening (12), the said upper surface (17) being covered with a sheet of acoustic foam (15) which lies along the extension of the said air passageway, **characterized in that** the said transverse beam (16) is fitted with a removable link (20) intended to surround at least partially the said sheet of acoustic foam (15) to hold it in contact with the said upper surface (17).

2. Air extraction device according to Claim 1, **characterized in that**, the said upper surface (17) having a contact edge (18) located facing the said rear portion (10) and an opposite free edge (19) away from the said rear portion, the said removable link (20) has a mounting end (30) connected to one of the said edges (18) and a latching end (22) intended to catch in the other edge (19).

3. Air extraction device according to Claim 2, **characterized in that** the said removable link (20) includes a flap mounted such that it can pivot on the said contact edge (18) in line with the said opening (12), the said flap having a free edge (22) ending in a locking tab (38), the said locking tab being arranged to clip on the said opposite free edge (19).

4. Air extraction device according to Claim 2, **characterized in that** the said transverse beam (16) has an upper panel defining the said upper surface (17) and forming the said edges (18, 19), the said upper panel having a transverse slot (24) in the said opposite free edge (19), the said locking tab (38) being arranged to be force-fitted into the said slot (24) to connect the said free end (22) to the said opposite free edge (19).

5. Air extraction device according to Claim 2, **characterized in that** the said transverse beam (16) and the said flap (20) are moulded together in a single piece of plastic.

## Patentansprüche

1. Entlüftungsvorrichtung eines Kraftfahrzeugs, die für die Luftzirkulation zwischen der Innen- und der Außenseite des Fahrzeugs bestimmt ist, wobei das Fahrzeug eine Karosserie aufweist, die einen Rückwandabschnitt (10) besitzt, wobei die Entlüftungsvorrichtung einen Luftdurchgangsweg aufweist, der durch eine Öffnung (12) mündet, die im Rückwandabschnitt (10) ausgebildet ist, wobei die Karosserie außerdem einen Querbalken (16) aufweist, der entlang des Rückwandabschnitts (10) verläuft, wobei der Querbalken (16) eine Oberfläche (17) aufweist, die sich im Wesentlichen lotrecht zum Rückwandabschnitt (10) unter der Öffnung (12) erstreckt, wobei die Oberfläche (17) von einer Platte aus Schallschutzschaumstoff (15) bedeckt ist, die sich in der Verlängerung des Luftdurchgangswegs erstreckt;
**dadurch gekennzeichnet, dass** der Querbalken (16) mit einem ausbaubaren Verbindungsglied (20) versehen ist, das dazu bestimmt ist, zumindest zum Teil die Platte aus Schallschutzschaumstoff (15) zum umgeben, um sie gegen die Oberfläche (17) in Anlage zu halten.

2. Entlüftungsvorrichtung nach Anspruch 1, **dadurch gekennzeichnet, dass**, da die Oberfläche (17) einen Kontaktrand (18), der sich gegenüber dem hinteren Abschnitt (10) befindet, und einen freien Rand (19) aufweist, der zum hinteren Abschnitt entgegengesetzt liegt, das ausbaubare Verbindungsglied (20) ein Befestigungsende (30), das fest mit einem der Ränder (18) verbunden ist, und ein freies Einhakende (22) aufweist, das dazu bestimmt ist, sich in den anderen Rand (19) einzuhaken.

3. Entlüftungsvorrichtung nach Anspruch 2, **dadurch gekennzeichnet, dass** das ausbaubare Verbindungsglied (20) eine Zunge aufweist, die gelenkig in den Kontaktrand (18) senkrecht vor der Öffnung (12) montiert ist, wobei die Zunge ein freies Ende (22) aufweist, das in einem Einrastansatz (38) endet, wobei der Einrastansatz geeignet ist, um in den entgegengesetzten freien Rand (19) einzurasten.

4. Entlüftungsvorrichtung nach Anspruch 2, **dadurch gekennzeichnet, dass** der Querbalken (16) eine Oberwand aufweist, die die Oberfläche (17) definiert und die Ränder (18, 19) bildet, wobei die Oberwand einen Querschlitz (24) im entgegengesetzten freien Rand (19) aufweist, wobei der Einrastansatz (38) geeignet ist, um mit Krafteinpassung in den Schlitz (24) eingefügt zu werden, um das freie Ende (22) mit dem entgegengesetzten freien Rand (19) zu verbinden.

5. Entlüftungsvorrichtung nach Anspruch 2, **dadurch gekennzeichnet, dass** der Querbalken (16) und die Zunge (20) zusammen aus einem Stück aus Kunststoffmaterial geformt sind.
